# EUROPÄISCHE PATENTSCHRIFT

(11) **EP 0 603 522 B1**
(45) Veröffentlichungstag und Bekanntmachung des Hinweises auf die Patenterteilung: **21.08.1996**
(21) Anmeldenummer: 93118040.0
(22) Anmeldetag: 08.11.1993
(51) Int. Cl.: B60C 15/036, B29D 30/08

(54) **Fahrzeugluftreifen mit einer Halterung hierfür sowie Vorrichtung zum Aufbauen des Reifenrohlings und Einrichtung zum Vulkanisieren dieses Rohlings**
Vehicle tire having a support, apparatus for building the green tire and device for vulcanizing such a green tire
Pneumatique de véhicule avec support, dispositif pour la fabrication du pneu cru et appareil pour la vulcanisation de ce pneu cru

(30) Priorität: 22.12.1992 DE 4243521
(43) Veröffentlichungstag der Anmeldung: 29.06.1994
(73) Patentinhaber: Continental Aktiengesellschaft, D-30165 Hannover (DE)
(72) Erfinder: Sergel, Horst, D-30657 Hannover (DE); Huinink, Heinrich, D-30823 Garbsen (DE)
(74) Vertreter: Depmeyer, Lothar

(56) Entgegenhaltungen:
- WO-A-92/00846
- CA-A- 1 098 810
- DE-A- 3 206 171
- FR-A- 2 332 149
- US-A- 4 223 713
- US-A- 4 231 410

## Beschreibung

Die Erfindung betrifft einen im wesentlichen aus Gummi oder gummiähnlichen Stoffen bestehenden Fahrzeugluftreifen mit einer z.B. felgenartigen Halterung für diesen Reifen sowie eine Vorrichtung zum Aufbauen des Reifenrohlings und ferner eine Einrichtung zum Vulkanisieren des Rohlings.

Die Erfindung geht von der Erkenntnis aus; dass die die Karkasse bildenden Festigkeitsträger - im allgemeinen in Form von Fäden, Seilen, Kabeln oder Bändern - immer dann eine ungünstige Beanspruchung erfahren, wenn sie neben der Zug- und Biegebeanspruchung eine Druck, Schub- oder Torsionsbeanspruchung erfahren müssen. Diese ungünstigen Beanspruchungen treten auch im Bereich der radial innen am Reifen gelegenen Verankerungen der Karkasse also in den Wulstabschnitten auf, die von Kernringen Gebrauch machen, um die die Festigkeitsträger herumgeführt sind.

Der Erfindung liegt die Aufgabe zugrunde, die eingangs erwähnten Reifen so zu verbessern, dass die Karkassbeanspruchung in den Verankerungsbereichen der Reifenseitenwände und in den Reifenseitenwänden selbst praktisch frei ist von den erwähnten, für die Karkasse ungünstigen Belastungen. Die CA-A-1 098 810 zeigt bereits einen Luftreifen gemäß dem Oberbegriff des Anspruchs 1.

Zur Lösung dieser Aufgabe ist erfindungsgemäss für Fahrzeugluftreifen der eingangs erwähnten Art die Kombination der Merkmale des Patentanspruchs 1 vorgesehen.

Demgemäss sind die Verstärkungseinlagen an ihren radial innen liegenden Enden nicht etwa an Wulstringen, sondern so verankert, dass sie bereits mit den Verlassen ihrer Verankerungselmente in die neutrale Biegelinie übergehen und somit dann nur noch den für sie günstigen Zug- und Biegebeanspruchungen unterworfen sind. Zweckmässigerweise lässt sich dieses Ziel am besten mit einzelnen Fäden, Seilen, Bändern od. dgl. erreichen, indem diese an der Aussenseite ihrer Halterungen z.B. an Haken verankert und umgelenkt werden.

Um dabei die Trennfläche zwischen der Halterung und den radial innen liegenden Enden der Reifenseitenwände zu entlasten, können nach einen weiteren Vorschlag gemäss Erfindung die radial aussen gelegenen Abschnitte der Halterung zu den Reifens eitenwänden hin eine sich vergrössernde Biegeelastizität erhalten, was z.B. bei einer Halterung aus einem an sich steifen Kunststoff durch Nachbehandlungen od. dgl. erreicht werden kann.

In Verfolg dieses Gedankens ist es auch möglich, die Reifenseitenwände und die Halterungen sich überlappend auszuführen, um dem Modulsprung entgegenzutreten.

Besonders wichtig ist ausserdem, dass die Erfindung nicht an die üblichen mit Felgenhorn ausgestatteten Halterungen ( Felgen ) gebunden ist.Vielmehr können aufgrund der Erfindung die einzelnen Reifenseitenwände für sich an einer ringförmigen Halterung verankert werden, die am Fahrzeug in beliebiger Weise an einem rotierenden Teil eines Fahrzeugrades befestigt werden können. Darüber hinaus sind diese Halterungen günstige Hilfsmittel für die Konfektion des Reifenrohlings und für dessen Vulkanisation in einer Form. So können die beiden als Halterung dienenden Ringe derart in der Reifenaufbaumaschine integriert werden, dass sie gewissermassen zumindest Einzelaufgaben dieser Herstellungseinrichtungen übernehmen können. Diese Funktionen sind auch deshalb erfüllbar, weil die starren Halterungen als Ringkörper eine genaue Zentrierung und Führung ermöglichen. So können die ringförmigen Halterungen z.B. beim Hineinbombieren der Karkasse in den Gürtelbereich genau erfasst und bewegt werden. Gleichwohl können die Halterungen axiale Passflächen haben, um die Halterungen mit der Karkasse innerhalb der Vulkanisierform genau zentriert unterzubringen.

Weitere Einzelheiten der Erfindung werden anhand der Zeichnung erläutert, in der vorzugsweise verwendete Ausführungsformen der Erfindung dargestellt sind.

Es zeigen :
- Fig. 1: einen radialen Teilschnitt durch einen auf einer Halterung befindlichen Fahrzeugluftreifen,
- Fig. 2: eine Einzelheit aus Fig. 1 in Richtung des Pfeiles II in Fig. 1 gesehen, und zwar unter Weglassung der elastischen Hüllschichten des Reifenkörpers,
- Fig. 3: einen radialen Teilschnitt durch eine Aufbauvorrichtung für einen Reifen gemäss Fig. 1,
- Fig. 4: einen radialen Teilschnitt durch eine Vulkanisierform zur Erstellung eines Reifens gemäss Fig. 1,
- Fig. 5: einen radialen Teilschnitt durch eine gegenüber Fig. 1 abgewandelten Halterung zusammen mit einem Teil des zugehörigen Fahrzeugluftreifens,
- Fig. 6 und 7: je radiale Teilschnitte durch eine Befestigungsstelle einer Reifenseitenwand an einer Halterung und
- Fig. 8: eine der Fig. 2 entsprechende Darstellung, jedoch unter Abwandlung der Befestigungselemente für die Festigkeitsträger der Karkasse.

Der im wesentlichen aus Gummi bestehende Reifenkörper 1 mit Seitenwänden 2, einem Laufstreifen 3, einer Karkasse 4 und einem Gürtel 5 unterhalb des Laufstreifens 3 ist auf zwei Spiegelsymmetrischen als Ringe 6 ausgeführten Halterungen aus Metall bzw. einem steifen Kunststoff installiert. Die Ringe 6 weisen axiale Innenflächen 7, radiale Kontaktflächen 8, sowie in den Reifeninnenraum vorspringende Abbiegungen 9 mit achsparallelen Stützflächen 1o zur Verbesserung der Notlaufeigenschaften des Reifens auf. In den beiden Kontaktflächen 8 sind die beiden Ringe 6 miteinander verklebt; nicht dargestellte Laschen od. dgl. dienen zur Befestigung der beiden Ringe 6 mit Reifen an übrigen Teilen der Fahrzeugräder. Im übrigen kann die Stützfläche 1o - wie gestrichelt wiedergegeben - etwa auf einem Drittel der lichten Höhe des Reifenhohlraumes angeordnet sein.

Zu beiden Seiten des Reifens weisen die Ringe 6 schräg nach oben gerichtete Schenkel 11 auf, die im wesentlichen der neutralen Biegelinie 12 des Reifenkörpers 1 insb. der Reifenseitenwände 2 stufenlos folgen, in der auch die Karkasse angeordnet ist. Diese besteht aus einer Vielzahl von fadenförmigen Festigkeitsträgern z.B. Fäden 13, die zur Karkassverankerung an den Ringen 6 um die dort gleichmässig über den Umfang verteilten Haken 14 geführt sind. Vorzugsweise verlaufen dies Fäden 13 radial, jedoch können sie auch nach Art einer Kreuzkarkassse verlegt sein.

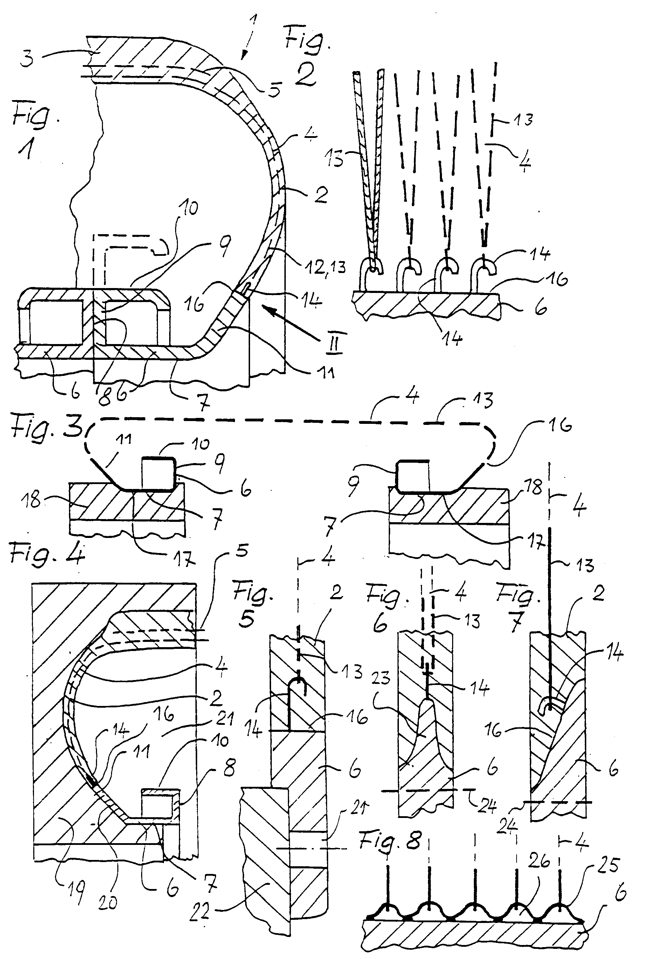

Die an den Ringen 6 befestigten Haken 14 können in Ebenen liegen, die durch die Schenkel 11 bestimmt sind ( Fig. 1, 2, 4 und 6 ), jedoch können sie auch in radialen Ebenen angeordnet sein ( Fig. 5 und 7 ).

Damit befinden sich die Fäden 13 von den Befestigungselementen beginnend in der neutralen Biegelinie 12 des Reifenkörpers 1 und erfahren demgemäss praktisch keine Druck- bzw. Scher-Torsionsbeanspruchungen.

Im übrigen ist der Gummi in der Trennfläche 16 zwischen dem Schenkeln 11 und den Reifens-eitenwänden 2 festhaftend angeordnet, also luftdicht gehalten.

Nach Anbringung der Fäden 13 an den Ringen 6 bzw. zur Anbringung der Fäden 13 werden die Ringe 6 zum Aufbau des Reifenrohlings benutzt z.B. in Umfangsnuten 17 von vorzugsweise segmentierten Ringkörpern 18 der Aufbauvorrichtung gehalten, in der somit die Karkasse erstellt, aber auch die Vereinigung des Karkassunterbaus mit der Zenithpartie ( Gürtel 5 und Laufstreifen 3 ) durch Hineinbombieren vollzogen werden kann, wobei erwähnt wird, dass während des Reifenaufbaus die Ringe 18 gegeneinander verdreht werden bzw. auch axial zueinander bewegt werden können. Die dazu erforderlichen Massnahmen und auch die Behandlung der einzelnen Fäden 13 sind nicht Gegenstand der Erfindung; hierzu können bekannte Vorbilder zur Verwirklichung benutzt werden.

Zur Vulkanisation des Reifens dienen die Ringe 6 insb. der genauen Zentrierung in Bezug auf die Formhälften 19 aufgrund der axialen Innnenfläche 7 und der schrägen Aussenflächen 2o der Schenkel 11. Die Ringe 6 begrenzen also stellenweise den Formenhohlraum 21, der unmittelbar mit einem Druckmittel, aber auch mittelbar mit einem Balg od. dgl. beaufschlagbar ist.

Der Ring 6 gemäss Fig. 5 ist scheibenartig geformt, er kann zusammen mit dem Reifenkörper 1 ggfs. unter Verwendung von Schraublöchern 21 an beliebigen Teilen 22 des Rades befestigt werden.

Bei den Ausführungsformen gemäss Fig. 6 und 7 ist die Trennfläche 16 abgewandelt, und zwar nicht nur zur Vergrösserung der Haftflächen, sondern in erster Linie zur Vermeidung des Mangels eines plötzlichen Modulsprungs zwischen den starren Ringen 6 und dem Gummi des Reifenkörpers 1. Bei der Ausführung gemäss Fig. 6 ist der Schenkel 11 mittig mit einem sich nach aussen verjüngenden Fortsatz 23 versehen, der im Zenith die Verankerungselemente bzw. Haken 14 aufweist, während bei der Ausführung gemäss Fig. 7 eine Überlappung mit schräger Trennfläche 16 benutzt wird, auf deren etwa halber Länge wiederum die Haken 14 angeordnet sind.

Darüber hinaus ist es möglich, den vorgenannten Übergang durch werkstoffliche Eigenschaften der Ringe 6 zu beeinflussen, die zusammen mit den Figurationen gemäss Fig. 6 und 7, aber auch unabhängig davon benutzt werden können.

Etwa radial ausserhalb des durch die gestrichelte Linie 24 aufgezeigten Bereichs können die an sich starren Ringe 6 z.B. durch eine Nachbehandlung derart ausgebildet sein, dass sie dort über eine grössere elastische Verformbarkeit, insb. eine vergrösserte Biegefreudigkeit verfügen, um eine Anpassung an die Verformbarkeit der Reifenseitenwände 2 herbeizuführen. Dabei kann eine allmähliche Steigerung dieser Werkstoffeigenschaften radial stetig oder stufenweise radial nach aussen vorgesehen sein.

Bei der Ausführung gemäss Fig. 8 ist am äusseren Umfang der Ringe ein wellenförmiger Draht 25 odgl. vorgesehen bzw. befestigt, der viele in Umfangsrichtung aufeinander folgende Ösen 26 zum Hindurchführen der Fäden 4 entstehen lässt.

Anstelle der Haken 14 kann auch eine andere Verankerung der Karkasse 4 bzw. ihrer Fäden 13 erfolgen. So kann die Halterung 6, also z.B. der Ring 6 gemäss Fig. 6 am äusseren Umfang so gestaltet sein z.B. mit einer Umfangsnut ausgestatet werden, die zur Aufnahme ggfs. umspritzter Fäden 13 dienen kann, um so durch Haftung eine Fixierung der Fäden 13 herbeiführen zu können. Die Fäden 13 würden dann in dieser Nut besser gehalten und z.B. durch Haftmittel verankert werden können. Dies bedeutet, dass die vorzugsweise am äusseren Umfang gelegenen Teile der Halterung 6 selbst die Verankerungsmittel aufweisen bzw. bilden.

## Patentansprüche

1. Im wesentlichen aus Gummi oder gummiähnlichen Stoffen bestehender Fahrzeugluftreifen mit einer beispielweise felgenartigen Halterung mit Befestigungselementen (14) für faden- oder bandförmige Verstärkungseinlagen (13) zur Bildung der Karkasse des Reifens, wobei die Befestigungselemente (14) haken- oder ösenartig geformt und radial aussen an der Halterung (6) befestigt sind und wobei die Verstärkungseinlagen (13) nahezu umlenkungsfrei von den Befestigungselementen (14) aus in die neutrale Biegelinie (12) der Reifenseitenwände (2) übergehen, dadurch gekennzeichnet, dass die durch die Haken- oder Ösenbildung bestimmten Ebenen radial zum Reifen gerichtet sind.

2. Reifen nach Anspruch 1, dadurch gekennzeichnet, daß in an sich bekannter Weise jedem Befestigungselement (14) der felgenartigen Halterung (6) lediglich eine Verstärkungseinlage (13) des Reifens zugeordnet ist.

3. Reifen nach Anspruch 1, dadurch gekennzeichnet, daß in an sich bekannter Weise die Verstärkungseinlagen (13) nur einlagig im Reifen angeordnet sind und im wesentlichen radial verlaufen.

4. Reifen nach Anspruch 1, dadurch gekennzeichnet, daß sich zumindest die den Reifenseitenwänden (2) zugekehrten Abschnitte der Halterungen (6) im wesentlichen in Richtung der Biegelinie (12) erstrecken.

5. Reifen nach Anspruch 1, dadurch gekennzeichnet, daß sich der Querschnitt der Halterungen (6) zu den Reifenseitenwänden (2) hin - vorzugsweise stetig - verringert.

6. Reifen nach Anspruch 5, dadurch gekennzeichnet, daß die Halterungen (6) eine schräg zu den Verstärkungseinlagen (13) verlaufende Außenfläche (16) aufweisen.

7. Reifen nach Anspruch 5, dadurch gekennzeichnet, daß die Halterungen (6) sich zumindest im wesentlichen querschnittssymmetrisch verjüngen.

8. Reifen nach Anspruch 1, dadurch gekennzeichnet, daß jeder Reifenseitenwand (2) eine Halterung (6) zugeordnet ist und die beiden Halterungen (6) an einander benachbarten Stellen korrespondierende Kontaktflächen (8) aufweisen, die vorzugsweise achsnormal ausgerichtet sind.

9. Reifen nach Anspruch 8, dadurch gekennzeichnet, daß die Halterungen (6) miteinander verklebt sind.

10. Reifen nach Anspruch 1, dadurch gekennzeichnet, daß die Reifenseitenwände (2) festhaftend mit den Halterungen (6) verbunden sind.

11. Reifen nach Anspruch 10, dadurch gekennzeichnet, daß die Reifenseitenwände (2) auch mit den Befestigungselementen (14, 25) festhaftend verbunden sind.

12. Reifen nach Anspruch 1, dadurch gekennzeichnet, daß die Verstärkungseinlagen (13) festhaftend mit der Halterung (6) verbunden sind.

13. Reifen nach Anspruch 1, dadurch gekennzeichnet, daß die Verstärkungseinlagen (13) in die Halterung (6) eingebettet sind.

14. Reifen nach Anspruch 1, dadurch gekennzeichnet, daß die Verstärkungseinlagen (13) mit einer die Verbindung mit der Halterung (6) fördernden Ummantelung versehen sind.

15. Reifen nach Anspruch 1, dadurch gekennzeichnet, daß die Halterungen (6) radial nach außen abstehende Vorsprünge, zum Beispiel Abbiegungen (9), aufweisen, die als Stützringe für die Zenitpartie des Reifens dienen.

16. Vorrichtung zum Aufbauen eines Rohlings für einen Reifen nach Anspruch 1,
**dadurch gekennzeichnet,** daß die Halterungen (6) zur Zentrierung und Fixierung des Reifenrohlings auf einem Bauteil (18) der Vorrichtung dienen.

17. Vorrichtung nach Anspruch 16, dadurch gekennzeichnet, daß sie während des Aufbaus die Halterungen (6) mittels segmentierter, im Durchmesser veränderbarer Ringkörper (18) hält, und zwar vorzugsweise in Umfangsnuten (17) dieser Ringkörper (18).

18. Vulkanisierform zum Abformen der Rohlinge für Reifen nach Anspruch 1, wobei der Reifenrohling samt seinen felgenartigen Halterungen (6) in die Vulkanisierform (19) einzubringen ist, dadurch gekennzeichnet, dass die Halterungen (6) den Formenhohlraum (21) zum Teil begrenzen und seitlich aussen Schrägflächen (20) zur Anlage an der Vulkanisierform (19) aufweisen.

19. Vulkanisierform nach Anspruch 16 dadurch gekennzeichnet, daß die Halterungen (6) achsparallele Zentrierflächen (7) aufweisen, die mit entsprechenden Flächen der Vulkanisierform korrespondieren.

20. Reifen nach Anspruch 1, dadurch gekennzeichnet, dass die Halterung (6) selbst zur Befestigung der Verstärkungseinlagen (13) ausgebildet ist.

21. Reifen nach Anspruch 2o, dadurch gekennzteichnet, dass die Halterung (6) mit vorzugsweise in Umfangsrichtung verlaufenden Nuten zum Einlegen der Verstärkungseinlagen (13) versehen ist.

22. Reifen nach Anspruch 21, dadurch gekennzeichnet, dass die Verstärkungseinlagen (13) festhaftend mit der Halterung (6) verbunden sind.

23. Reifen nach Anspruch 2o, dadurch gekennzeichnet, dass die Verstärkungseinlagen (13) in die Halterung (6) eingebettet sind.

24. Reifen nach Anspruch 2o, dadurch gekennzeichnet, dass die Verstärkungseinlagen (13) mit einer die Verbindung mit der Halterung (6) fördernden Ummantelung versehen sind.

25. Reifen nach Anspruch 2o, dadurch gekennzeichnet, dass die Halterung (6) am äussern Umfang gemäss Anspruch 5, insb. gemäss Anspruch 7 geformt ist.

## Claims

1. Pneumatic vehicle tyre formed substantially from rubber or rubber-like substances, having a holder, which is rim-like, for example, and provided with securing elements (14) for filament- or strip-like reinforcing members (13) to form the carcase of the tyre, the securing elements (14) being shaped in a hook- or eye-like manner and being secured radially externally on the holder (6), and the reinforcing members (13) protruding in an almost deflection-free manner from the securing elements (14) into the neutral bending line (12) of the side walls (2) of the tyre, characterised in that the planes, which are determined by the formation of hooks or eyes, are orientated radially relative to the tyre.

2. Tyre according to claim 1, characterised in that, in a manner known per se, only one reinforcing member (13) of the tyre is associated with each securing element (14) of the rim-like holder (6).

3. Tyre according to claim 1, characterised in that, in a manner known per se, the reinforcing members (13) are disposed in the tyre in only a single layer and extend substantially radially.

4. Tyre according to claim 1, characterised in that at least the portions of the holders (6) facing the side walls (2) of the tyre extend substantially in the direction of the bending line (12).

5. Tyre according to claim 1, characterised in that the cross-section of the holders (6) reduces - preferably uniformly - towards the side walls (2) of the tyre.

6. Tyre according to claim 5, characterised in that the holders (6) have an external surface (16) extending inclinedly relative to the reinforcing members (13).

7. Tyre according to claim 5, characterised in that the holders (6) taper at least substantially symmetrically in respect of the cross-section.

8. Tyre according to claim 1, characterised in that a holder (6) is associated with each side wall (2) of the tyre, and the two holders (6) have corresponding contact faces (8) at locations adjacent one another, said contact faces preferably being orientated in an axis-normal manner.

9. Tyre according to claim 8, characterised in that the holders (6) are glued together.

10. Tyre according to claim 1, characterised in that the side walls (2) of the tyre are adhesively connected to the holders (6).

11. Tyre according to claim 10, characterised in that the side walls (2) of the tyre are also adhesively connected to the securing elements (14, 25).

12. Tyre according to claim 1, characterised in that the reinforcing members (13) are adhesively connected to the holder (6).

13. Tyre according to claim 1, characterised in that the reinforcing members (13) are embedded in the holder (6).

14. Tyre according to claim 1, characterised in that the reinforcing members (13) are provided with a covering, which promotes the connection with the holder (6).

15. Tyre according to claim 1, characterised in that the holders (6) have radially outwardly protruding projection members, for example bent portions (9), which serve as supporting rings for the crown portion of the tyre.

16. Apparatus for constructing a blank for a tyre according to claim 1, characterised in that the holders (6) serve to centre and fix the tyre blank on a component part (18) of the apparatus.

17. Apparatus according to claim 16, characterised in that, during its construction, it retains the holders (6) by means of segmented annular bodies (18), which have variable diameters, preferably in circumferential grooves (17) in these annular bodies (18)

18. Vulcanising mould for shaping the blanks for tyres according to claim 1, whereby the tyre blank can be introduced into the vulcanising mould (19) together with its rim-like holders (6), characterised in that the holders (6) partially define the mould cavity (21) and have inclined faces (20) laterally externally for abutment with the vulcanising mould (19).

19. Vulcanising mould according to claim 16, characterised in that the holders (6) have axis-parallel centring faces (7), which correspond to corresponding faces of the vulcanising mould.

20. Tyre according to claim 1, characterised in that the holder (6) itself is configured to secure the reinforcing members (13).

21. Tyre according to claim 20, characterised in that the holder (6) is provided with grooves, which preferably extend in the circumferential direction, for the insertion of the reinforcing members (13).

22. Tyre according to claim 21, characterised in that the reinforcing members (13) are adhesively connected to the holder (6).

23. Tyre according to claim 20, characterised in that the reinforcing members (13) are embedded in the holder (6).

24. Tyre according to claim 20, characterised in that the reinforcing members (13) are provided with a covering which promotes the connection with the holder (6).

25. Tyre according to claim 20, characterised in that the holder (6) is shaped according to claim 5, more especially according to claim 7, at its outer circumference.

## Revendications

1. Pneumatique de véhicule, constitué pour l'essentiel de caoutchouc ou de matières analogues au caoutchouc, comportant un support, par exemple de type jante, pourvu d'éléments de fixation (14) d'armatures de renfort (13) sous forme de fils ou de bandes destinées à former la carcasse du pneumatique, les éléments de fixation (14) étant conformés en crochet ou en oeillet et étant fixés à l'extérieur radialement au support (6), et les armatures de renfort (13) passant pratiquement sans déviation des éléments de fixation (14) à la ligne neutre (12) de flexion des flancs (2) du pneumatique, caractérisé en ce que les plans définis par la formation des crochets ou des oeillets sont dirigés radialement par rapport au pneumatique.

2. Pneumatique suivant la revendication 1, caractérisé en ce que, d'une manière en soi connue, il est associé à chaque élément de fixation (14) du support (6) de type jante seulement une armature de renfort (13) du pneumatique.

3. Pneumatique suivant la revendication 1, caractérisé en ce que, d'une manière connue en soi, les armatures de renfort (13) ne sont disposées qu'en une seule couche dans le pneumatique et s'étendent sensiblement radialement.

4. Pneumatique suivant la revendication 1, caractérisé en ce qu'au moins les parties des supports (6) tournées vers les parois latérales (2) du pneumatique s'étendent sensiblement en direction de la ligne (12) de flexion.

5. Pneumatique suivant la revendication 1, caractérisé en ce que la section transversale des supports (6) diminue - de préférence constamment - vers les flancs (2) du pneumatique.

6. Pneumatique suivant la revendication 5, caractérisé en ce que les supports (6) comportent une surface extérieure (16) s'étendant en oblique par rapport aux armatures de renfort (13).

7. Pneumatique suivant la revendication 5, caractérisé en ce que les supports (6) se rétrécissent au moins sensiblement avec symétrie de leur section transversale.

8. Pneumatique suivant la revendication 1, caractérisé en ce qu'un support (6) est associé à chaque flanc (2) du pneumatique, et que les deux supports (6) comportent, en des emplacements voisins l'un de l'autre, des surfaces de contact (8) correspondantes qui sont de préférence normales à l'axe.

9. Pneumatique suivant la revendication 8, caractérisé en ce que les supports (6) sont collés entre eux.

10. Pneumatique suivant la revendication 1, caractérisé en ce que les flancs (2) du pneumatique sont reliés aux supports (6) en y adhérant solidement.

11. Pneumatique suivant la revendication 10, caractérisé en ce que les flancs (2) du pneumatique sont également reliés aux éléments de fixation (14, 25) en y adhérant solidement.

12. Pneumatique suivant la revendication 1, caractérisé en ce que les armatures de renfort (13) sont reliées au support (6) en y adhérant solidement.

13. Pneumatique suivant la revendication 1, caractérisé en ce que les armatures de renfort (13) sont novées dans le support (6).

14. Pneumatique suivant la revendication 1, caractérisé en ce que les armatures de renfort (13) sont pourvues d'un enrobage favorisant la liaison avec le support (6).

15. Pneumatique suivant la revendication 1, caractérisé en ce que les supports (6) comportent des parties en saillie dépassant radialement vers l'extérieur, par exemple des parties coudées (9), qui servent d'anneaux de soutien pour la partie zénithale du pneumatique.

16. Dispositif destiné à la confection d'un pneumatique cru suivant la revendication 1, caractérisé en ce que les supports (6) servent au centrage et à l'immobilisation du pneumatique cru sur une partie (18) du dispositif.

17. Dispositif suivant la revendication 16, caractérisé en ce que, pendant la confection, il maintient les supports (6) au moyen de pièces annulaires (18) segmentées de diamètre variable, et ce de préférence dans des rainures circonférentielles (17) de ces pièces annulaires (18).

18. Moule de vulcanisation destiné au moulage de pneumatiques crus suivant la revendication 1, le pneumatique cru devant être introduit avec ses supports (6) de type jante dans le moule de vulcanisation (19), caractérisé en ce que les supports (6) délimitent en partie l'empreinte (21) du moule et comportent latéralement des surfaces inclinées (20) extérieures destinées à s'appliquer sur le moule de vulcanisation (19).

19. Moule de vulcanisation suivant la revendication 16, caractérisé en ce que les supports (6) comportent des surfaces de centrage (7) parallèles à l'axe, qui correspondent à des surfaces conjuguées du moule de vulcanisation.

20. Pneumatique suivant la revendication 1, caractérisé en ce que le support (6) lui-même est conçu pour la fixation des armatures de renfort (13).

21. Pneumatique suivant la revendication 20, caractérisé en ce que le support (6) est muni de rainures, qui s'étendent de préférence dans la direction circonférentielle et qui sont destinées à l'insertion des armatures de renfort (13).

22. Pneumatique suivant la revendication 21, caractérisé en ce que les armatures de renfort (13) sont reliées au support (6) en y adhérant solidement.

23. Pneumatique suivant la revendication 20, caractérisé en ce que les armatures de renfort (13) sont noyées dans le support (6).

24. Pneumatique suivant la revendication 20, caractérisé en ce que les armatures de renfort (13) sont pourvues d'un enrobage favorisant la liaison avec le support (6).

25. Pneumatique suivant la revendication 20, caractérisé en ce que le pourtour extérieur du support (6) est conformé suivant la revendication 5, notamment suivant la revendication 7.
